# EUROPÄISCHE PATENTSCHRIFT

(11) **EP 0 823 967 B1**
(45) Veröffentlichungstag und Bekanntmachung des Hinweises auf die Patenterteilung: **10.11.1999**
(21) Anmeldenummer: 96914875.8
(22) Anmeldetag: 03.04.1996
(51) Int. Cl.: G05B 19/406, F16P 3/22, F15B 20/00

(54) **EINRICHTUNG ZUR SICHERUNG EINER ELEKTROHYDRAULISCHEN ANTRIEBSEINHEIT**
SAFETY DEVICE FOR AN ELECTRO-HYDRAULIC DRIVE UNIT
DISPOSITIF DE SECURITE POUR UNITE D'ENTRAINEMENT ELECTRO-HYDRAULIQUE

(30) Priorität: 29.04.1995 DE 19515884
(43) Veröffentlichungstag der Anmeldung: 18.02.1998
(73) Patentinhaber: HARTMANN + LÄMMLE GMBH & CO. KG, D-71277 Rutesheim (DE)
(72) Erfinder: SCHULZE, Eckehart, D-71287 Weissach (DE); SCHABER, Hubert, D-71277 Rutesheim (DE)
(74) Vertreter: Lutz, Johannes Dieter, Dr.
(86) Internationale Anmeldenummer: EP9601456
(87) Internationale Veröffentlichungsnummer: WO9635077

(56) Entgegenhaltungen:
- DE-A- 3 110 210
- US-A- 3 253 683
- US-A- 3 605 554
- US-A- 4 873 912

## Beschreibung

Die Erfindung betrifft eine Einrichtung zur Sicherung einer elektrohydraulischen Antriebseinheit gegen ein störungsbedingtes Ausrücken ihres beweglichen Elements aus einer Stillstandsposition, in der im Arbeitsbereich einer Fertigungsmaschine, bei der die Antriebseinheit als Werkzeug- oder Werkstückvorschub oder Positionierungsantrieb eingesetzt ist, gefahrlos manuelle Eingriffe möglich sein sollen und mit den weiteren, im Oberbegriff des Patentanspruchs 1 genannten gattungsbestimmenden Merkmalen.

Eine zum vorgenannten Zweck geeignete Sicherheitseinrichtung ist durch die DE-A-31 10 210 bekannt.

Derartige Sicherheitseinrichtungen werden bei NC- oder CNC-gesteuerten Antriebseinheiten, bei denen, wie im Oberbegriff des Patentanspruchs 1 vorausgesetzt, zur Positionssteuerung des beweglichen Elementes des hydraulischen Antriebes ein mit inkrementaler elektrischer Positions-Sollwertvorgabe und mechanischer Positions-Istwertrückmeldung arbeitendes Nachlaufregelventil vorgesehen ist, wobei die inkrementale Positions-Sollwertvorgabe durch impulsweise Ansteuerung eines Elektromotors zur Ausführung von Drehungen seines Rotors um inkrementale Winkelbeträge erfolgt, benötigt, um in den genannten Stillstandsphasen sicherzustellen, daß eine Fehlfunktion der elektronischen Steuereinheit oder ein Ausfall der elektrischen Versorgung und/oder eine Fehlfunktion der hydraulischen Versorgung der Antriebseinheit nicht zu Bewegungen des von der Antriebseinheit angetriebenen Maschinenelements führen können, durch die eine an der Maschine arbeitende Person verletzt werden könnte.

Die Antriebseinneit darf - üblicherweise - erst dann wieder ihren automatisch gesteuerten Betrieb aufnehmen können, nachdem die Bedienungsperson mit beiden Händen je einen Schalter betätigt, die weit außerhalb des Arbeitsbereiches der Maschine angeordnet sind, wodurch insoweit sichergestellt wird, daß sich die Bedienungsperson außerhalb des Gefahrenbereiches befindet. Typische Bearbeitungsmaschinen, die eine Sicherungseinrichtung der geschilderten Art benötigen, sind z.B. Tiefzieh- oder Prägepressen, bei denen mindestens von Zeit zu Zeit die Notwendigkeit besteht, ein Werkstück manuell zu entnehmen oder Einrichtarbeiten im Arbeitsbereich der Maschine vorzunehmen, z.B. wenn der Materialvorrat aufgebraucht ist und die Maschine auf die Verarbeitung eines anderen Materialvorrats eingestellt werden muß, oder wenn eine irgendwie geartete Störung auftritt, deren Beseitigung Manipulationen im Arbeitsbereich der Maschine erfordert.

Die hydraulische Antriebseinheit einer derartigen Presse umfaßt in üblicher Gestaltung einer solchen einen linearen Hydrozylinder, der mit nach unten aus dem Gehäuse austretender Kolbenstange, mit der das Pressenwerkzeug - der Bär - fest verbunden ist, und vertikalem Verlauf seiner zentralen Längsachse am Maschinengestell montiert ist, wobei der Kolben dieses Hydrozylinders die druckdicht-bewegliche Abgrenzung eines oberen - zylindrischen - Antriebsdruckraumes, durch dessen Druckbeaufschlagung der Kolben zur Ausführung seines Arbeitshubes ansteuerbar ist, gegen einen unteren, ringförmigen Antriebsdruckraum bildet, durch dessen Druckbeaufschlagung bei gleichzeitiger Druckentlastung des oberen Druckraumes Rückzugsbewegungen des Pressenbärs steuerbar sind und die hierbei wirksamen Kolbenflächen F₁ und F₂, innerhalb derer der Kolben zur Ausführung seines Arbeitshubes bzw. seines Rückzugshubes mit Druck beaufschlagbar ist, im Verhältnis F₁/F₂ von etwa 10/1 stehen.

Zur Absicherung einer Stillstandsphase einer solchen Antriebseinheit gegen Verrückungen des Kolbens, die zu Gefährdungen einer Bedienungsperson führen könnten, ist es bekannt, zum einen den kleinerflächig begrenzten Ringraum "nach außen" durch zwei hydraulisch in Reihe geschaltete Magnetventile sowohl gegen den Tank als auch die Hochdruckpumpe des Druckversorgungsaggregats abzusperren, und, andererseits, ebenfalls durch zwei hydraulisch in Reihe geschaltete Magnetventile das Regelventil, über das allenfalls eine Druckeinspeisung in den oberen, größerflächig begrenzten Antriebsdruckraum erfolgen kann, gegen die Pumpe des Druckversorgungsaggregats abzusperren, wobei diese Schutzventile als 2/2-Wege-Ventile ausgebildet sind, die stromlos sperrend und im erregten Zustand ihrer Steuermagnete durchlässig sind, sowie elektrisch, z.B. durch Endschalter, überwacht sind, so daß ihre jeweilige Funktionsstellung anhand des Endschalter-Ausgangssignals erkennbar und dadurch feststellbar ist, ob das jeweilige Ventil seine funktionsgerechte Schalt- oder Grundstellung einnimmt. Ist eines dieser Sicherheitsventile, die bei jeder Stillstandsphase in ihre - sperrende - Grundstellung gelangen sollen, defekt, so führt dies, solange das jeweils andere mit dem defekten Ventil in Serie liegende Ventil funktionsfähig ist, nicht dazu, daß der Kolben des Antriebs-Hydrozylinders sich bewegen kann, so daß insoweit eine Bedienungsperson nicht gefährdet ist. Außerdem ist anhand der Ausgangssignale der Überwachungs-Endschalter erkennbar, daß ein Fehler vorliegt, und bei Auftreten eines solchen Fehlers die Maschine abgeschaltet, wobei eine Inbetriebnahme derselben erst wieder möglich ist, nachdem das fehlfunktionsbehaftete Ventil, das anhand des Ausgangssignals seines Überwachungsschalters identifizierbar ist, repariert oder ausgetauscht worden ist.

Um in einer gleichsam schlechtesten Situation, die sich in einer Stillstandsphase der Antriebseinheit durch eine Fehlfunktion der Steuerelektronik ergeben kann, und darin besteht, daß bei nach außen abgesperrtem kleinflächig begrenztem Ringraum der hohe Ausgangsdruck des Druckversorgungsaggregats in den großflächig begrenzten Antriebsdruckraum eingespeist werden kann, mit der Folge, daß in dem Ringraum ein Druck aufgebaut wird, der wegen der durch das Flächenverhältnis F₁/F₂ bedingten 10-fachen Druckübersetzung zu einer Selbstzerstörung des Antriebs-Hydrozylinders führen kann, ist bei der bekannten Sicherheitseinrichtung ein Überdruckventil vorgesehen, das zwischen den kleinflächig begrenzten Ringraum und den Tank des Druckversorgungsaggregats geschaltet ist und im Falle eines überhöhten Druckes in diesem Ringraum ein Abspritzen von Hydraulikmedium in den Tank ermöglicht, zwar mit der Folge, daß der Kolben der Antriebseinheit sich bewegen kann und der dadurch bedingten Folge einer Verletzungsgefahr, jedoch unter Vermeidung einer höheren Gefahr, die mit einer Zerstörung des Antriebs-Hydrozylinders unter 10-fach-übersetztem Druck verknüpft wäre.

Die insoweit erläuterte, einschlägigen Sicherheitsvorschriften genügende und gängigem Stand der Technik entsprechende Sicherheitseinrichtung ist mit zumindest den folgenden Nachteilen behaftet:
1. Das Überdruckventil ist selbst ein sicherheits-relevantes Element, das bei einer Beschädigung, z.B. einem Bruch seiner Schließfeder, unter dem aus der Last des Kolbens des Antriebszylinders resultierenden Druck in dessen Ringraum zwangsläufig öffnet, mit der Folge, daß der Antriebskolben, der z.B. bei einer Presse zusammen mit dem Preßwerkzeug ein Gewicht von mehreren 1000 N haben kann, gleichsam nach unten fällt, da der Sicherheits-Ventilblock durch das schadhafte Überdruckventil überbrückt ist und über dieses eine direkte Verbindung des Ringraumes des Antriebszylinders zum Vorratsbehälter des Druckversorgungsaggregats besteht. Eine solche Fehlersituation ist sehr gefährlich, da das Überdruckventil, wenn es seiner Sicherheitsfunktion genügen soll, auf einen großen Durchflußquerschnitt in seinem geöffneten Zustand ausgelegt sein muß, was andererseits im Fehlfunktionsfall bedeutet, daß der Kolben sehr rasch nach unten fallen kann.
2. Die "doppelte" Sicherung, einerseits des Ringraumes des Antriebszylinders gegen ein Ausströmen des Betriebsmediums und, andererseits, des großflächig begrenzten Antriebsdruckraumes gegen einen Zustrom von unter Druck stehendem Betriebsmedium mittels je zweier hintereinander geschalteter Magnetventile ist technisch sehr aufwendig. Dies gilt insbesondere dann, wenn nicht nur mit einer Druckversorgungspumpe gearbeitet wird, sondern eine Zweikreis-Druckversorgung vorgesehen ist, weil sich dann der bezüglich der Pumpensicherung zu treibende Aufwand entsprechend multipliziert.
3. Das insoweit erläuterte bekannte Konzept der Sicherung von Stillstandsphasen eines "vertikalen" Hydraulikantriebes ist auch unter betriebstechnischen Gesichtspunkten nachteilig, da in der "doppelt" gesicherten Stillstandsphase des Antriebszylinders dessen beide Druckräume gegen das Druckversorgungsaggregat abgesperrt sind und daher eine Positionsregelung, die den Antriebszylinderkolben in der Stillstandsposition halten könnte, nicht möglich ist, der Kolben jedoch aufgrund unvermeidbarer Leckölströme ständig langsam - nach unten - wandert. Eine Fortsetzung eines NC- oder CNC-gesteuerten Betriebes der Maschine aus der jeweils aktuellen Kolbenposition des Antriebes heraus ist zwar dann möglich, wenn, wie bei elektrohydraulischen Antriebssteuerungen die mit elektrischer Positions-Istwertrückmeldung arbeiten, erforderlich, ein - teures - Absolutwegmeßsystem vorhanden ist, dessen momentane Positions-Istwertausgabe von der elektronischen Steuereinheit als Ausgangspunkt für die weitere Bewegungssteuerung berücksichtigbar ist, nicht jedoch dann, wenn zur Bewegungssteuerung des Antriebes ein mit mechanischer Positions-Istwertrückmeldung arbeitendes Nachlaufregelventil vorgesehen ist, bei dem lediglich die Positions-Sollwerteingabe elektrisch inkremental erfolgt und die Information über die absolute Position des Kolbens aus einer Abzählung von Positions-Steuerimpulsen gewinnbar sein muß, die, ausgehend von einer bekannten Position des Kolbens zu dessen Bewegungssteuerung erzeugt worden sind. Bei eine auf diese Weise numerisch gesteuerten hydraulischen Antrieb muß daher nach einer sicherheitsüberwachten Stillstandsphase zunächst eine Referenzposition angefahren werden was natürlich mit unerwünschtem Zeitbedarf verknüpft ist, bevor der numerisch gesteuerte Betrieb der hydraulischen Antriebseinheit wieder aufgenommen werden kann.

Aufgabe der Erfindung ist es daher, eine Einrichtung der eingangs genannten Art anzugeben, die bei gleichwohl einfachem Aufbau dem Erfordernis weitestmöglicher Sicherheit in Stillstandsphasen der Antriebseinheit genügt und darüber hinaus eine geregelte Einhaltung der Stillstandsposition des beweglichen Elements der Antriebseinheit ermöglicht.

Diese Aufgabe wird erfindungsgemäß durch die kennzeichnenden Merkmale des Patentanspruchs 1 gelöst.

Hiernach ist der Sollwert-Vorgabemotor mit einer Feststell-Bremseinrichtung ausgerüstet, die, gesteuert durch Ausgangssignale der elektronischen NC- bzw. CNC-Steuereinheit der Maschine, im Falle einer kontrollierten Stillstandsphase der Antriebseinheit in einen aktivierten Zustand gelangt, in dem auf den Rotor des Sollwerts-Vorgabemotors ein Bremsmoment wirkt, das einem mehrfachen des durch den Motor entfaltbaren Drehmoments entspricht; hierdurch wird der Motor in einer Stillstandsphase, während derer im Arbeitsbereich der Maschine hantiert werden kann, in der der Stillstandsposition des Hydraulikantriebes entsprechenden Sollwert-Vorgabeposition kraftschlüssig festgesetzt, so daß die Stillstandsposition immer noch der Regelung unterworfen und in einem gleichsam stationären Zustand derselben aktiv aufrechterhalten wird und deswegen keinerlei leckagebedingtes Ausrücken des Zylinderkolbens aus seiner - geregelten - Stillstandsposition eintreten kann, so lande die Steuerelektronik und das Druckversorgungsaggregat intakt sind.

Im Falle durch die Nachlaufregelung vermittelten Bewegungs-Steuerungsbetriebes des Motors ist die Feststell-Bremseinrichtung aktiv durch Ansteuerung mindestens eines Aktuators gelöst, der die Lösebetätigung der Bremse gegen eine von einem Kraftspeicher permanent ausgeübte Stellkraft vermittelt, durch die die Bremse in ihre Feststell-Funktionsstellung drängbar ist; der Motor kann in dieser aktiv gelösten Zustand der Bremse frei drehen und einer raschen Impulsansteuerung folgen.

Bei einer Fehlfunktion des hydraulischen und/oder des elektrischen Versorgungs- und Steuerkreises gelangt die Feststellbremse durch die permanent wirksame Stellkraft des Kraftspeichers ebenfalls in ihre den Rotor des Sollwert-Vorgabemotors kraftschlüssig fixierenden Funktionszustand, so daß auch in einer solchen Fehlfunktionssituation, nunmehr allein durch die Wirkung der mechanischen Istwert-Rückmeldung das Nachlaufregelventil in eine Funktionsstellung gelangt, in der der Ringraum des Antriebszylinders gegen ein Abströmen von Betriebsmedium gesichert ist und ein Zustrom von unter Druck stehendem Betriebsmedium zum großflächig begrenzten Antriebsdruckraum des Antriebs-Hydrozylinders ausgeschlossen ist und dieser - über das Nachlaufregelventil Verbindung zum drucklosen Vorratsbehälter des Druckversorgungsaggregats hat, so daß auch für einen Fall, daß, bedingt durch eine hydraulische Fehlschaltung, Druck aus einem, Druckspeicher dem Antriebs-Hyrdrozylinder zugeführt werden sollte, dieser unmittelbar zum Vorratsbehälter in abgebaut werden kann und ein Aufbau eines übersetzten Druckes im Ringraum des Antriebshydrozylinders auch insoweit ausgeschlossen ist. Ein Überdruckventil als seinerseits sicherheitsrelevantes Funktionselement wird nicht benötigt, was sowohl der Funkzionssicherheit als auch der Vereinfachung der Antriebseinheit zugute kommt. Dasselbe gilt sinngemäß mit Bezug auf die nicht benötigten elektrisch ansteuerbaren Sicherheitsventile. Der für die Realisierung der erfindungsgemäßen Sicherungseinrichtung spezifische technische Aufwand für eine elektrisch oder elektrohydraulisch betätigbare Motorbremse ist deutlich geringer als der hierdurch vermiedene Aufwand für mindestens vier Magnetventile mit elektrisch überwachbaren Funktionsstellungen und ein Überdruckventil, so daß die erfindungsgemäße Sicherungseinrichtung insgesamt bei verbesserter Sicherheitsfunktion auch preisgünstiger realisierbar ist.

In bevorzugter Auslegung der Sicherungseinrichtung ist das allein durch die Stellkraft des Kraftspeichers auf den Rotor des Sollwertvorgabemotors ausübbare Bremsmoment deutlich kleiner als das vom Sollwertvorgabemotor erzeugbare Drehmoment und beträgt zwischen 1/5 und 1/2, vorzugsweise um 1/4 des Motordrehmoments.

Bei dieser Auslegung der Feststell-Bremseinrichtung ist es, ohne diese lösen zu müssen möglich, Einrichtarbeiten an der Maschine durchzuführen, z.B. eine Referenzposition, die von der elektronischen Steuereinheit erfaßt werden muß, bevor danach wieder im selbsttätig gesteuerten Betrieb gearbeitet werden kann, "langsam" anzufahren, ohne die Sicherheitseinrichtung außer Funktion setzen zu müssen, wobei in einem solchen Einrichtbetrieb die Betriebsmedium-Zufuhr zum Antriebs zylinder über einen gedrosselten Strömungspfad erfolgt, der bei vorgegebenem Betriebsdruck den Volumenstrom auf einen Wert begrenzt, mit dem maximale Bewegungsgeschwindigkeiten des Kolbens des Antriebszylinders von nur etwa 5 mm pro Sekunde möglich sind. Desweiteren wird durch diese Auslegung der Feststell-Bremseinrichtung auf einfache Weise sichergestellt, daß die mechanische Rückmeldeeinrichtung des Nachlaufregelventils nicht beschädigt werden kann, wenn der Kolben des Antriebszylinders im Verlauf einer längeren Stillstandsphase, in der allein die durch den Kraftspeicher erzeugbare Bremskraft wirksam ist, durch Leckage bedingt, sich weiter aus seiner bei Einleitung der Stillstandsphase eingenommenen Position entfernt, als es dem mit einem maximalen Aussteuerhub des Nachlauf-Regelventils verknüpften Absenkungsweg entspricht.

In Kombination hiermit ist eine zweckmäßige Auslegung der Sicherungseinrichtung dadurch näher spezifiziert, daß das im aktivierten Zustand der Feststell-Bremseinrichtung zusätzlich zu dem aus der Betätigungskraft des Kraftspeichers resultierenden Bremsmoment erzeugte Bremsmoment zwischen dem doppelten und dem 5-fachen, vorzugsweise etwa dem 3-fachen Wert des maximalen Motordrehmoments beträgt, und daß die von dem Aktuator zum Lösen der Feststell-Bremseinrichtung entfaltbare Kraft zwischen dem doppelten Wert der in Schließrichtung der Feststellbremse wirkenden Kraft des Kraftspeichers und deren 4-fachem Wert beträgt und vorzugsweise etwa dem 2,5-fachen dieses Wertes entspricht.

Wenn, wie gemäß Anspruch 4 vorgesehen, die Feststell-Bremseinrichtung als Backenbremse mit radial verschiebbar geführten, an die äußere Mantelfläche eines mit der Rotorwelle des Sollwertvorgabemotors koaxialen, mit dieser drehfest verbundenen, ringflanschförmigen Reibkörpers andrückbaren Backen ausgebildet ist, die durch vorgespannte, den Kraftspeicher bildende Federn in Anlage mit der Reibfläche des Reibkörpers drängbar und durch Ansteuerung des Aktuator von der Reibfläche abhebbar sind, wobei die Bremsbacken axialsymmetrisch bezüglich der Achse der Rotorwelle gruppiert und vorzugsweise zwei Bremsbacken vorgesehen sind, ist eine in axialer Richtung nur wenig ausgedehnte Bauweise der Reibungsbremse der Feststell-Bremseinrichtung möglich.

Eine auch in radialer Richtung günstig raumsparende Bauweise der Reibungsbremse einschließlich ihrer Betätigungselemente wird in bevorzugter Gestaltung derselben dadurch erzielt, daß sowohl zum Lösen der Feststellbremse als auch zu deren die Entfaltung des höchstmöglichen Bremsmoments vermittelnden Aktivierung vorgesehene Aktuatoren als doppelt-wirkende lineare Hydrozylinder mit einseitigen Kolbenstangen ausgebildet sind, mit denen die Bremsbacken fest verbunden sind, wobei diese Hydrozylinder durch Druckbeaufschlagung ihrer Kolben auf deren stangenseitiger, ringförmiger Kolbenfläche und Druckentlastung ihrer durch die Kolben größerflächig begrenzten Druckräume zum Lösen der Bremse und durch Druckbeaufschlagung ihrer großflächig begrenzten Druckräume und -entlastung ihrer stangenseitigen Druckräume zum aktiven Anlegen der Bremse mit hoher Bremskraft ansteuerbar sind.

Hierbei ist es besonders vorteilhaft, wenn die den Kraftspeicher bildenden, vorgespannten Federn als Druckwendelfedern ausgebildet sind, die sich an den axial gehäusefesten Begrenzungen der durch die Kolben großflächig begrenzten Antriebsdruckräume der Hydrozylinder abstützen und auf dem überwiegenden Teil ihrer Länge von Sackbohrungen der Zylinderkolben aufgenommen sind, so daß sie nur mit einer Länge, die dem Lösehub der Bremsbacken entspricht, zur radialen Bohrgröße derjenigen "mechanischen" Baugruppe der FeststellBremseinrichtung beitragen, die die Reibungsbremse und deren Aktuatoren umfaßt und diese Baugruppe mit radialen Abmessungen realisierbar ist, die nicht größer sind als diejenigen des Sollwert-Vorgabemotors.

In besonders zweckmäßiger Gestaltung der Sicherungseinrichtung sind deren zur Betätigung der Bremsbacken vorgesehene Hydrozylinder hydraulisch parallel geschaltet, so daß zu einer Funktionsüberwachung der Sicherungseinrichtung selbst ein einziger Druckschalter genügt, der für niedrigen und Nonen Druck in den großflächig begrenzten Druckräumen der Hydrozylinder charakteristische elektrische Ausgangssignale erzeugt, die der elektronischen Steuereinheit der Maschine als diesbezügliche Informationssignale zugeleitet sind.

Zur Funktionssteuerung der Feststell-Bremseinrichtung genügt dann ein einziges z.B. als 4/2-Wege-Ventil ausgebildetes Magnetventil.

Ebenso ist es zweckmäßig, wenn ein Druckschalter vorcesehen ist, der für niedrigen und hohen Druck in den stangenseitigen Druckräumen der Hydrozylinder charakteristische elektrische Ausgangssignale erzeugt, die in sinnfähigerweise analog zu einer Funktionsüberwachung der Feststell-Bremseinrichtung nutzbar sind.

In besonders vorteilhafter Gestaltung der Reibungsbremse liegen deren Backen im geschlossenen Zustand der Bremse mit linienförmiger Berührung an dem Reibkörper an, so daß sich zwischen diesem und den Backen eine hohe Flächenpressung ergibt, die in dem denkbar ungünstigsten Fall, daß auf irgendwelche Weise Schmiermittel in die Bremse gelangt sein könnte und deren Reibkörper und/oder die Bremsbacken mit einem Schmiermittelfilm überzogen sein könnten, gewährleistet, daß dieser Schmiermittelfilm im Anlagebereich durchtrennt und abgestreift wird, so daß der Reibbeiwert mit dem die Kraft, mit der die Bremsbacken in Anlage mit dem Reibkörper gepreßt werden, in die für die Bremsverzögerung erforderliche Tangentialkraft umgesetzt wird, stets konstant ist und dem für die in Anlage miteinander gedrängten Materialien charakteristischen Wert entspricht, der für metallische Berührung der Backen und des Reibkörpers einen typischen Wert von 0,15 hat.

Hierbei ist es besonders vorteilhaft, wenn die Bremsbacken den Reibkörper im angelegten Zustand der Bremse jeweils entlang zweier parallel zur zentralen Längsachse des Rotors verlaufender Linien berühren und, in Richtung dieser Längsachse gesehen, ihr azimutaler Abstand ϕ vorzugsweise einen Wert zwischen 30° und 90° hat und gleichzeitig der radiale Verschiebeweg Δr der Bremsbacken zwischen dem gelösten Zustand der Bremse und deren Konfiguration, in der die Bremsbacken den Reibkörper berühren, kleiner ist als der durch den Term r(1 - cosϕ) gegebene Wert, in dem mit r der Radius der Reibfläche des Reibkörpers bezeichnet ist. In dieser Gestaltung der Bremsbacken ist gewährleistet, daß diese sich beim Anlegen der Bremse zwangsläufig so ausrichten, daß sich die zur zentralen Achse des Rotors parallele Orientierung ihrer berührungslinien ergibt und daher eine Sicherung der Bremsbacken gegen ein Verdrehen um die Längsachse ihrer Betätigungskolben nicht erforderlich ist. Eine derartige Gestaltung der Bremsbacken ist dadurch realisierbar, daß diese, gesehen in einer rechtwinklig zur zentralen Längsachse des Rotors des Sollwert-Vorgabemotors verlaufenden Schnittebene, die Form eines dickwandigen - stabilen - U-Profils haben, dessen freie Schenkel im Berührungsbereich einen Krümmungsradius haben, der einem kleinen Bruchteil von 1/10 bis 1/100 des Krümmungsradius der Reibfläche des Reibkörpers entspricht.

Eine herstellungstechnisch vorteilhafte Gestaltung eines Backenpaares der Reibbremse besteht in spezieller Gestaltung desselben darin, daß die Backen zwischen ihren parallelen Anlagekanten eine kreiszylindrisch gekrümmte, konkave Wölbung haben, deren Krümmungsradius kleiner ist als derjenige der äußeren Mantelfläche des Reibkörpers. Die gewölbten Flächen der beiden Backen können bei dieser Gestaltung als Bohrung eines einstückigen Teils - vorbereiten - gefertigt werden, das anschließend in die Backen bildende Hälften unterteilt wird. In jedem Falle ist es vorteilhaft, wenn die in Richtung der Rotordrehachse gemessene Ausdehnung der Bremsbacken kleiner ist als die in derselben Richtung gemessene Dicke des Reibkörpers der Feststellbremse, damit ein gleichsam rinnenförmiges Verschleißbild der Bremsbacken ausgeschlossen ist, das ein sattes Anlegen der Bremse behindern könnte.

In Kombination hiermit kann es vorteilhaft sein, wenn das Material, aus dem die Bremsbacken bestehen, zumindest in einer Oberflächenschicht, härter ist als das Material des Reibkörpers.

Insbesondere in Kombination hiermit, darüberhinaus auch aus fertigungstechnischen Gründen ist es zweckmäßig, wenn der Reibkörper als außen zylindrische Hülse ausgebildet ist, die auf die Rotorwelle des Sollwert-Vorgabemotors aufsteckbar und durch wechselseitig formschlüssigen Eingriff mit dieser drehfest koppelbar ist. Der das Verschleißteil der Feststellbremse bildende Reibkörper ist dann von Zeit zu Zeit ohne nennenswerten Aufwand auswechselbar und einer Fertigung aus einem Leichtmetall zugänglich, so daß sein Beitrag zum Trägheitsmoment des Rotors des Sollwert-Vorgabemotors niedrig gehalten werden kann.

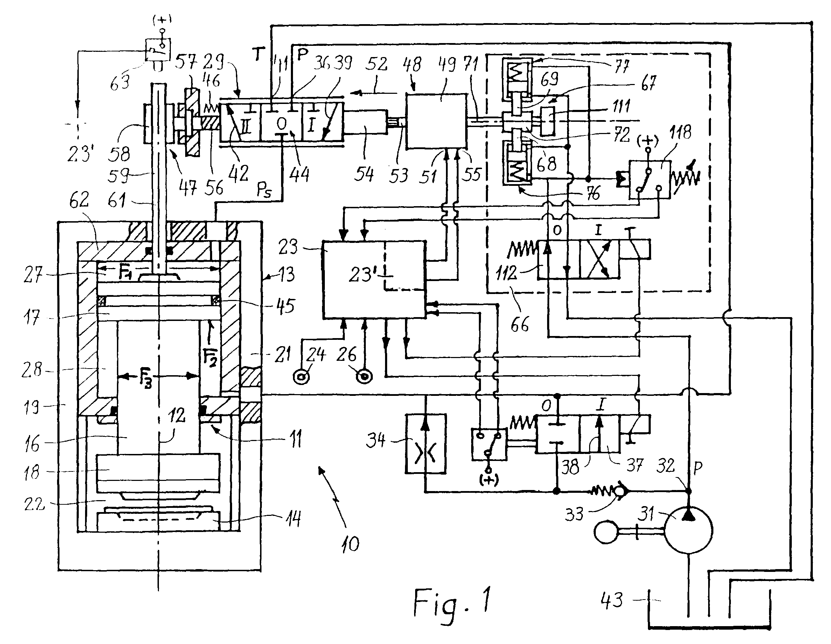

Weitere Einzelheiten der erfindungsgemäßen Sicherungseinrichtung ergeben sich aus der nachfolgenden Beschreibung eines speziellen Ausführungsbeispiels anhand der Zeichnung. Es zeigen
- Fig. 1: ein schematisch stark vereinfachtes elektrohydraulisches Blockschaltbild einer unter Verwendung eines Nachlaufregelventils mit elektrischer PositionsSollwertvorgabe und mechanischer Positions-Istwertrückmeldung NC- oder CNC-gesteuerten Presse mit einem stehend angeordneten doppelt-wirkenden Hydrozylinder als Antriebseinheit und mit einer erfindungsgemäßen Einrichtung zur Sicherung von Stillstandsphasen des Kolbens des Hydrozylinders und

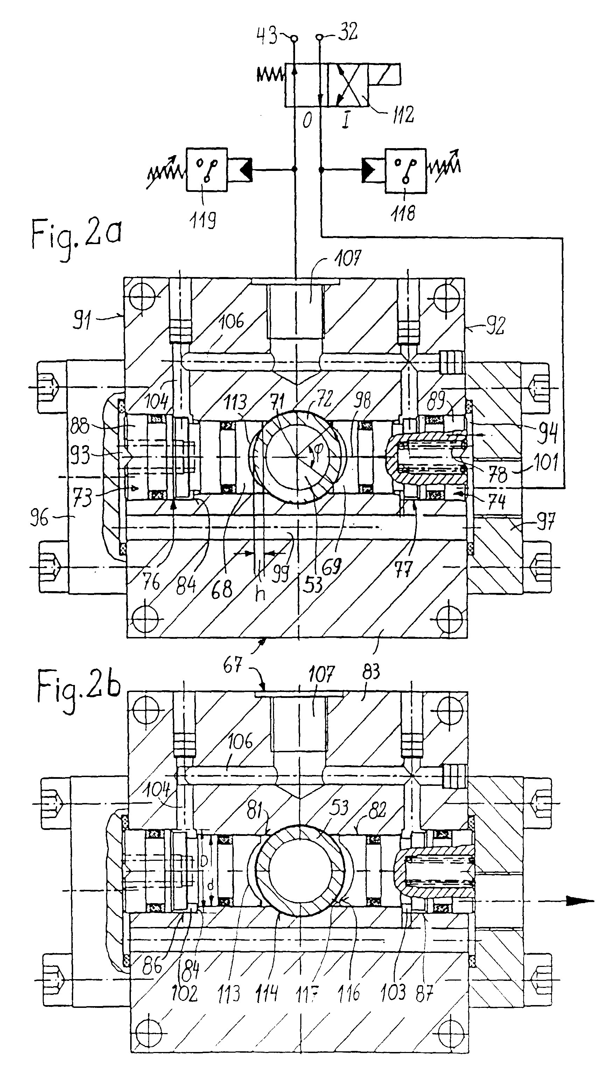

- Fig. 2a und b: Schnittdarstellungen alternativer Funktionsstellungen einer Feststell-Bremseinrichtung der Sicherungseinrichtung gemäß Fig. 1, mittels der ein Sollwert-Vorgabe-Motor des Nachlaufregelkreises der Antriebseinheit gemäß Fig. 1 in einer der Stillstandsposition entsprechenden Stellung seines Rotors festsetzbar ist, etwa im Maßstab 1,4/1.

Die in der Fig. 1 insgesamt mit 10 bezeichnete, ohne Beschränkung der Allgemeinheit als Tiefziehpresse dargestellte, hydraulisch angetriebene Presse hat als Antriebseinheit einen doppelt-wirkenden linearen Hydrozylinder 11, der in stehender Anordnung - mit vertikalem Verlauf seiner zentralen Längsachse 12 - im oberen Teil des der Grundform nach rechteckig rahmenförmigen Pressengestells 13 montiert ist, in dessen unterem Teil der Amboß 14 der Presse und der zwischen diesem und einer oberen Endstellung vertikal verschiebbare mit der Antriebs-Kolbenstange 16 des Zylinderkolbens 17 fest verbundene Pressenbär 18 in einem durch die vertikalen Rahmensäulen 19 und 21 des Pressengestells 13 seitlich begrenzten Arbeitsbereich 22 angeordnet sind.

Dieser Arbeitsbereich 22 ist im Betrieb der Presse 10 durch eine nicht dargestellte Schutzeinrichtung, z.B. eine selbsttätig verriegelbare, elektrisch positions-überwachte Schutzklappe gegen einen Zugriff von außen gesichert, wobei auch unbeschadet weiterer Sicherheitsbedingungen, deren kumulative Erfüllung durch eine Sicherheits-Steuereinheit 23 überprüfbar ist, eine Inbetriebnahme der Presse 10 nur möglich ist, wenn eine Bedienungsperson von Hand gleichzeitig zwei Steuerschalter 24,26 betätigt, die außerhalb des Arbeitsbereichs 22 so weit voneinander entfernt angeordnet sind, daß sie einhändig nicht betätigt werden können.

Der die druckdicht bewegliche Abgrenzung zwischen einem oberen Antriebsdruckraun 27 und einem unteren, von der Antriebskolbenstange 16 axial durchsetzten unteren Antriebsdruckraum 28 des Hydrozylinders 11 bildende Kolben 17 ist auf seiner Oberseite mit dem über ein Nachlaufregelventil 29 in den oberen Antriebsdruckraum 27 einkoppelbaren - geregelten Druck Pₛ auf einen Fläche F₁ beaufschlagbar, die wesentlich, z.B. 10 bis 20 mal größer ist als die Ringfläche F₂, auf der der Kolben 17 mit dem in den unteren, stangenseitigen Antriebsdruckraum 28 einkoppelbaren Ausgangsdruck P des Druckversorgungsaggregats 31 beaufschlagbar ist.

Der Druckausgang 32 des Druckversorgungsaggregats 31 ist über ein Ausgangs-Rückschlagventil 33 und ein mit diesem hydraulisch in Reihe geschaltetes druckstabilisiertes Stromregelventil 34 sowohl mit dem unteren, ringförmigen Antriebsdruckraum 28 des Hydrozylinders 11 als auch mit dem P-Versorgungsanschluß 36 des Nachlaufregelventils 29 verbunden, wobei das Ausgangsrückschlagventil 33 durch relativ höheren Druck am Ausgang 32 des Druckversorgungsaggregats 31 als in dem zum Strombegrenzungsventil 34 führenden Strömungspfad in seine Offenstellung gesteuert und sonst sperrend ist.

Zu dem Stromregelventil 34 ist ein Versorgungssteuerventil 37 parallel geschaltet, das als 2/2-Wege-Magnetventil mit federzentrierter Sperrstellung als Grundstellung 0 und einer Durchflußstellung als Schaltstellung I ausgebildet ist, in der ein Durchflußpfad 38 hinreichenden Querschnitts freigegeben ist, um den vom Druckversorgungsaggregat 31 lieferbaren Ölstrom für möglichst schnell erfolgende Arbeits- und Rückzugsbewegungen des Pressenbärs 18 nutzen zu können, die entsprechend dem für den Hydrozylinder 11 vorgesehenen Differential-Betrieb allein durch Druckbeaufschlagung oder - -entlastung des oberen Antriebsdruckraumes 27 mittels des Nachlaufregelventils 29 gesteuert werden.

In Anpassung an diese Betriebsart ist das Nachlaufregelventil 29, in einer für sich bekannten Bauweise, z.B. als Schieberventil oder als eine Kombination von Sitzventilen, die gemeinsam betätigbar sind, so realisiert, daß in einer dem Vorschubbetrieb des Hydrozylinders 11, in dem sich der Kolben 17 und mit diesem der Bär 18 der Presse sich auf deren Amboß 14 zubewegt, zugeordneten Funktionsstellung I ein Strömungspfad 39 freigegeben ist, über den der P-Versorgungsanschluß 36 des Nachlaufregelventils mit dem oberen Druckraum 27 des Hydrozylinders 11 verbunden, dieser Druckraum 27 jedoch gegen den Tankanschluß 41 des Nachlaufregelventils 29 abgesperrt ist, desweiteren in einer Funktionsstellung II des Nachlaufregelventils 29, die dem Rückzugsbetrieb des Hydrozylinders 11 zugeordnet ist, in dem sich der Kolben 17 des Hydrozylinders 11 aufwärts, d.h. der Bär 18 vom Amboß 14 der Presse wegbewegt, ein Durchflußpfad 42 freigegeben ist, der die Verbindung des Tankanschlusses 41 des Nachlaufregelventils 29 mit dem oberen Druckraum 27 des Hydrozylinders vermittelt und dieser Druckraum 27 gegen den P-Versorgungsanschluß 36 des Nachlaufregelventils 29 abgesperrt ist, sowie "zwischen diesen beiden Funktionsstellungen I und II" eine Funktionsstellung 0 hat, in der im Sinne einer Null-Überdeckung von ventilkörperseitigen und gehäuseseitigen Steuerkanten des Nachlaufregelventils 29 sowohl dessen P-Versorgungsanschluß 36 als auch dessen mit dem drucklosen Vorratsbehälter 43 verbundener T-(Tank)-Anschluß 41 gegen den oberen Antriebsdruckraum 27 des Antriebs-Hydrozylinders 11 abgesperrt sind.

Das Nachlaufregelventil 29 ist so gestaltet, daß ein Übergang von der einen Durchflußstellung I oder II in die dazu alternative Durchflußstellung II oder I stets über die Sperrstellung 0 führt.

Solange das Nachlaufregelventil 29 - vor Inbetriebnahme der Presse 10 - nicht angesteuert ist, ist sind sein(e) Ventilkörper, der/die in der Darstellung der Fig. 1 durch das 3/3-Wege-Ventilsymbol 44 repräsentiert ist/ sind durch eine oder mehrere Ventilfeder(n) 46 in die der Funktionsstellung II entsprechende Position gedrängt, in der sich der Pressenbär 18 beim Einschalten der Druckversorgung allenfalls nach oben bewegen kann, was unter dem Aspekt der Sicherheit der Presse 10 erwünscht ist. Ein hierdurch bedingter Aufwärtshub des Kolbens 17 ist, unabhängig davon in welcher Position dieser sich zuvor befunden hatte, auf einen kleinen Wert As begrenzt, da das Nachlaufregelventil durch die Wirkung der insgesamt mit 47 bezeichneten mechanischen Rückmeldeeinrichtung zur Einnahme seiner sperrenden - mittleren - Funktionsstellung 0 angesteuert wird, in der die Verbindung, die zuvor zwischen dem oberen Antriebsdruckraum 27 und dem drucklosen Vorratsbehälter 43 über den in der Funktionsstellung II freigegebenen Durchflußpfad 42 bestanden hatte, aufgehoben ist, und daher der Kolben 17 nach Durchlaufen des kleinen Hubes Δs stehen bleibt. Soweit sich der Kolben geringfügig weiter nach oben bewegt, als es für das Erreichen der Sperrstellung 0 des Nachlaufregelventils 29 erforderlich ist und dieses daher in eine der Funktionsstellung I entsprechende konfiguration seiner Steuerkanten gelangt, wobei der Öffnungsquerschnitt des in der Funktionsstellung I freigegebenen Strömungspfades 39 mit zunehmender Auslenkung aus der Sperrstellung 0 heraus auch zunimmt, so wird durch die hierdurch zustandegekommene Verbindung des oberen Antriebsdruckraumes 27 des Antriebshydrozylinders 11 mit dem P-Versorgungsanschluß 36 des Nachlaufregelventils Druck in den oberen Antriebsdruckraum 27 eingekoppelt und dadurch der Kolben 17 wieder zurückbewegt, wobei der Kolben 17 umso stärker abgebremst wird, je mehr sich die Funktionsstellung des Nachlaufregelventils 29 der der Sperrstellung 0 entsprechenden Konfiguration seiner gehäusefesten und ventilkörperseitigen Steuerkanten nähert, da hiermit einhergehend sich der Durchflußquerschnitt des jeweils freien Strömungspfades 39 oder 42 verringert.

in einem gleichsam stationären Zustand, der sich nach wenigen Regelspielen der geschilderten Art ergibt, bleibt der Kolben 17, abgesehen von kleinen Korrekturbewegungen deren Richtung durch die mechanische Rückmeldeeinrichtung 47 bestimmt wird, stehen und seine Position als durch das Nachlaufregelventil 29 geregelte Stillstandsposition aufrechterhalten.

Dies gilt, intakten Zustand des Druckversorgungsaggregats 31 vorausgesetzt, auch dann, falls der Kolben sich aufgrund unvermeidbarer Leckölströme, die vom unteren Antriebsdruckraum 28 über das Nachlaufregelventil 29 zum Vorratsbehälter 43 oder von diesem über Kclbendichtungen 45 hinweg in den oberen Antriebsdruckraum 27 des Hydrozylinders 11 "kriechen" - übertreten - können, langsam nach unten bewegt, da dies ebenfalls ein Ansprechen der Rückmeldeeinrichtung 47 im Sinne einer kompensatorischen Ansteuerung des Nachlaufregelventils in dessen Funktionsstellung II zufolge hat, wodurch der Zylinderkolben 17 wieder in seine geregelte Stillstands-Position zurückgeholt wird.

Eine Änderung der Position des Kolbens 17 ist nur durch eine sollwertseitige Ansteuerung des Nachlaufregelventils 29 mittels der insgesamt mit 48 bezeichneten Sollwertvorgabeeinrichtung möglich, wobei die Positions-Sollwertvorgabe elektrisch gesteuert oder auch manuell gesteuert erfolgen kann. Für die Positions-Sollwertvorgabeeinrichtung 48 und die - - mechanische - Positions-Istwertrückmeldeeinrichtung, durch deren Zusammenwirken eine kontrollierte Bewegungssteuerung des Antriebszylinderkolbens 17 im Betrieb der Presse 10 erzielbar sein muß, der CNC-gesteuert ablaufen kann, sei, zum Zweck der Erläuterung, ein nachfolgend im wesentlichen anhand funktioneller Eigenschaften erläuterter Aufbau vorausgesetzt, bei deren Kenntnis ein Fachmann der elektrohydraulischen Regelungstechnik in der Lage ist, das Nachlaufregelventil 29 einschließlich der Positions-Sollwertvorgabeeinrichtung 48 und der mechanischen Positions-Istwertrückmeldeeinrichtung 47 konstruktiv zu realisieren.

Die Positions-Sollwertvorgabeeinrichtung 48 umfaßt einen elektrischen Schrittmotor 49, der durch einen Ansteuerimpuls, der dem Schrittmotor 49 an einem Abwärts-Steueranschluß 51 zugeleitet wird, gesehen in Richtung des Pfeils 52 der Fig. 1 zur Ausführung einer Drehung seines Rotors um einen inkrementalen Drehwinkel definierten Betrages Δϕ im Gegenuhrzeigersinn ansteuerbar ist und durch einen Ansteuerimpuls, der ihm an einem Aufwärts-Steuereingang 55 zugeleitet wird, zur Ausführung einer inkrementalen Drehbewegung gleichen Winkelbetrages im Uhrzeigersinn ansteuerbar ist. Mit der Rotorwelle 53 des Schrittmotors 49 ist eine Hohlwelle 54 durch wechselseitig in Eingriff stehende Geradverzahnungen rotatorisch drehfest, jedoch axial verschiebbar gekoppelt, die auf einem vom Schrittmotor 49 entfernt angeordneten Endabschnitt mit einem Innengewinde versehen ist, mit dem eine Gewindespindel 56 der mechanischen Positions-Ist-wertrückmeldeeinrichtung 47 in kämmendem Eingriff steht. Diese Gewindespindel 56 ist drehbar, in axialer Richtung jedoch nicht-verschiebbar an einem mit dem nicht dargestellten Gehäuse des Nachlaufregelventils 29 fest verbundenen Gestellteil 57 der Presse 10 gelagert.

Mit der Gewindespindel 56 ist ein Ritzel 58 der Rückmeldeeinrichtung 47 drehfest verbunden, das mit einer Zahnstange 59 in kämmendem, Eingriff steht, welche die Verschiebung des Antriebszylinderkolbens 17 mit ausführt und mit diesem durch eine Kolbenstange 61 geringen Durchmessers fest verbunden ist, die druckdicht-verschiebbar durch einen den axial-gehäusefesten Abschluß des oberen Antriebsdruckraumes 27 bildenden Deckel 62 des Antriebszylinders 11 hindurchgeführt ist.

Die Steigung der Gewinde, über die die Hohlwelle 54, die mittels des Schrittmotors 49 rotatorisch antreibbar ist, sowie der Gewindespindel 56, die über den durch das Ritzel 58 und die Zahnstange 59 gebildeten Zahnstangentrieb rotatorisch antreibbar ist, sowie die Anordnung der Zahnstange 59 bezüglich des Ritzels 58 sind dahingehend aufeinander abgestimmt, daß eine Ansteuerung des Schrittmotors 49 über seinen Abwärtssteueranschluß 51, die zu einer Drehbewegung seines Rotors im Gegenuhrzeigersinn führt, eine axiale Verschiebung der Hohlwelle 54 - gemäß der Darstellung der Fig. 1 nach links - zur Folge hat, durch die über ein nicht dargestelltes Betätigungselement das Nachlaufregelventil in seine Funktionsstellung I gelangt, und eine daraus resultierende Abwärtsbewegung des Antriebszylinderkolbens 17 zu einem rotatorischen Antrieb der Rückmeldespindel 56 führt, dessen Drehsinn derselbe ist, wie derjenige der Hohlwelle 54, so daß in einer Betriebsphase des Hydrozylinders 11, in der dessen Kolben sich mit konstanter oder annähernd konstanter Geschwindigkeit auf den Amboß 14 zubewegt, das Nachlaufregelventil 29 mit demjenigen Querschnitt des jeweils wirksamen Durchfluß-Steuerungspfades 39 oder 42 aufgesteuert ist, bei dem der jeweils erforderliche Hydraulikölstrom über das Nachlaufregelventil 29 fließen kann. Entsprechendes gilt sinngemäß, wenn der Schrittmotor 49 über seinen Aufwärtssteueranschluß 55, gesehen in Richtung des Pfeils 52 im Uhrzeigersinn angetrieben ist, das Nachlaufregelventil in seine Funktionsstellung II gesteuert ist und der Zylinderkolben 17 sich im Rückzugsbetrieb des Antriebszylinders 11 aufwärts bewegt. Die Geschwindigkeit, mit der sich der Kolben 17 abwärts oder aufwärts bewegt, wird durch die Ausgabefrequenz gesteuert, mit der die von einer NC- oder CNC-Steuereinheit 23' erzeugten Steuerimpulse an den Abwärtssteuereingang 51 oder den Aufwärtssteuereingang 55 des Schrittmotors 49 abgegeben werden.

Die Informationen über die jeweilige Istposition des Zylinderkolbens 17 wird, abgesehen von dem auslegungsbedingten Nachlaufweg Δs durch algebraische Summation der dem Schrittmotor 49 an seinem Abwärtssteuereingang 51 und an seinem Aufwärtssteuereingang 55 zugeleiteten, jeweils inkrementalen Hubabschnitten entsprechenden Ansteuerimpulse gewonnen, deren Abzählung mit Bezug auf eine Feferenzposition erfolgt, die mittels eines Positionsgebers 63 erfaßbar ist, der z.B. ein Positions-Referenzsignal erzeugt, wenn die Zahnstange 59 des Zahnstangenritzeltriebes 59,58 der Rückmeldeeinrichtung 47 eine einem oberen Bereich der möglichen Kolbenstellungen entsprechende Position einnimmt, die am Beginn eines Arbeitszyklus der Presse 10 angefahren wird, auf den anschließend eine Vielzahl von selbsttätig gesteuerten Pressenzyklen folgen können, Innerhalb derer die Positionssteuerung des Kolbens 17 mit Bezug auf die solchermaßen erfaßte Referenzposition erfolgt.

Um für die Dauer von Stillstandsphasen des Antriebszylinders 11, innerhalb derer im Arbeitsbereich 22 der Presse 10 manuelle Eingriffe einer Bedienungsperson, z.B. zum Zweck der Entnahme eines bearbeiteten Werkstückes 64 oder einer Positions-Justierung eines solchen vornehmbar sein müssen, sicherzustellen, daß der Zylinderkolben 17 in der Stillstandsposition bleibt und eine Verletzungsgefährdung der Bedienungsperson weitestmöglich ausgeschlossen ist, ist eine insgesamt mit 66 bezeichnete Sicherungseinrichtung voraesehen, die zumindest dann wirksam wird, wenn die Bedienungsperson, nachdem die Presse 10 stillgesetzt worden ist, eine im Normalfall den Zugang zum Arbeitsbereich 22 der Presse verhindernde nicht dargestellte Schutzeinrichtung öffnet und dadurch ein elektromechanisch erzeugtes Signal auslöst, durch das die Sicherheitssteuereinheit 23 und die Sicherungseinrichtung 66 aktiviert werden.

Die Sicherungseinrichtung 66, zu deren Erläuterung nunmehr auch auf die Fig. 2a und 2b Bezug genommen sei, umfaßt eine insgesamt mit 67 bezeichnete Feststellbremse, mittels derer der in den Fig. 1 sowie 2a und 2b lediglich durch seine Rotorwelle 53 repräsentierte Rotor des Schrittmotors 49 festsetzbar ist. In der Fig. 2a ist der angelegte, in der Fig. 2b der gelöste Zustand der Feststellbremse dargestellt.

Die Feststellbremse 67 ist als Backenbremse mit zwei Bremsbacken 68 und 69 ausgebildet, die bezüglich der zentralen Längsachse 71 diametral einander gegenüberliegend angeordnet sind und radial an die äußere Mantelfläche einer als Reibkörper vorgesehenen ringzylindrischen Bremshülse 72 andrückbar sind, welche drehfest mit einem aus dem Gehäuse des Schrittmotors 49 an dessen dem Nachlaufregelventil abgewandten Seite austretenden freien Endabschnitt der Rotorwelle 53, diese koaxial umschließend, verbunden ist.

Die Bremsbacken 68 und 69 sind durch radial innere Flansche von Kolben 73 und 74 zweier doppelt-wirkender Hydrozylinder 76 und 77 gebildet, die, zum einen, ein Anlegen der Bremsbacken mit hohem Bremsmoment der Feststellbremse 67 ermöglichen, alternativ dazu ein aktives Öffnen der Feststellbremse 67 gegen die Wirkung vorgespannter Bremsfedern ermöglichen, welche die Kolben 73 und 74 in eine Anlagestellung der Feststellbremse 67 drängen, in der diese noch ein Mindestbremsmoment entfaltet, wenn die Druckversorgung für die Antriebs-Hydrozylinder 76 und 77 der Bremse 67 ausgefallen ist.

Die Kolben 73 und 74 sind als Stufenkolben ausgebildet, deren die Bremsbacken 68 und 69 bildende, dem Durchmesser d nach kleinere Kolbenstufen in miteinander fluchtenden Bohrungen 81 und 82 eines Bremsengehäuseblocks 83 druckdicht verschiebbar geführt sind, die über je eine radiale Ringschulter 84 an mit diesen Bohrungen 81 und 82 koaxiale Bohrungsstufen 86 und 87 anschließen, in denen die Kolben 73 und 74 mit je einem Flansch 88 bzw. 89 entsprechend größeren Durchmessers D druckdicht verschiebbar geführt sind. Die größeren Bohrungsstufen 86 und 87 münden an einander gegenüberliegenden parallelen seitlichen Begrenzuncsflächen 91 und 92 des Gehäuseblocks 83, zu denen die gemeinsame zentrale Längsachse 98 der Stufenbohrungen rechtwinklig verläuft, innerhalb des lichten Querschnittes flach-topfförmiger Vertiefungen von Zylinderabschlußflanschen 96 und 97, die druckdicht an den Gehäuseblock 83 anmontiert sind und die axial aehäusefeste Begrenzung der Antriebsdruckräume der beiden Antriebszylinder 76 und 77 der Bremse 67 bilden, innerhalb der die großflächigen Kolbenflansche 88 und 89 der Zylinderkolben zum Anlegen der Bremse 64 mit hohem Bremsmoment mit hohem Druck beaufschlagbar sind. Die beiden durch die Vertiefungen 93 und 94 der Zylinderabschlußflansche 96 und 97 begrenzten Antriebsdruckräume sind über eine parallel zur zentralen Längsachse 98 der beiden Antriebszylinder 76 und 77 verlaufende Durchgangsbohrung 99 miteinander in kommunizierender Verbindung und sind - in hydraulischer Parallelschaltung - über einen gemeinsamen Versorgungsanschluß 101, der an einem der Zylinderabschlußflansche angeordnet ist, mit Druck beaufschlagbar oder entlastbar.

Durch die radialen Ringschultern 84 der Stufenbohrungen 81, 86 sowie 82,87 und die jeweils größeren Kolbenstufen 88 und 89 der Stufenkolben 73 und 74 sind zum einen die axial gehäusefesten und zum anderen die axial beweglichen Begrenzungen je eines Ringraumes 102 bzw. 103 der Bremsenantriebszylinder 76,77 gebildet. Diese Ringräume 102 und 103 stehen über nach außen abgestopfte Radialbohrungen 104 und eine diese miteinander verbindende, nach außen ebenfalls abgestopfte Querbohrung 106 miteinander sowie mit einem Versorgungsanschluß 107, der am Gehäuseblock 83 anaeordnet ist, in Verbindung und sind über diesen in hydraulischer Parallelschaltung mit Druck beaufschlagbar bzw. entlastbar.

Die Stufenkolben 73 und 74 werden durch die vorgespannten Druckwendelfedern 78, die auf dem überwiegenden Teil ihrer Länge von Sackbohrungen 109 der Stufenkolben 73 bzw. 74 aufgenommen sind und sich außenseitig an den Zylinderabschlußflanschen 96 bzw. 97 abstützten, radial nach innen in Anlage ihrer die Bremsbacken 68 und 69 bildenden Holbenflansche mit der Bremshülse 72 gedrängt, woraus das Mindestbremsmoment resultiert, das bei ausgefallener Druckversorgung noch auf den Rotor des Schrittmotors 49 wirkt.

Die Bremsfedern 78 sind so ausgelegt, daß das allein aus den Federkräften resultierende Bremsmoment den Rotor des Schrittmotors 49 zwar hinreichend sicher gegen "Mitnahme"-Kräfte festhalten kann, die z.B. infolge von Reibung zwischen der Sollwert-Vorgabewelle 54 und der Istwert-Rückmeldespindel 56 auftreten könnten, wenn sich der Kolben 17 des Antriebszylinders 11 aufgrund von Lecköl-Strömen unter seinem Eigengewicht langsam nach unten bewegt und dadurch die Rückmeldeeinrichtung 47 langsam angetrieben wird, daß jedoch das allein durch die Wirkung der Bremsfedern 78 erzeugte Bremsmoment deutlich geringer ist als das von dem Schrittmotor 49 entfaltbare Drehmoment, so daß in diesem allein durch die Federkräfte geschlossenen Zustand der Feststellbremse 67 ein z.B. zum Anfahren der Referenzposition des Hydrozylinderkolbens 17 erforderlicher Vorschub- oder Rückzugsbetrieb des Hydrozylinders 11 durch z.B. manuell gesteuerte Beaufschlagung des Schrittmotors 49 mit Positions-Sollwert-Vorgabeimpulsen erfolgen kann, oder der Rotor des Schrittmotors auch manuell mittels eines am freien Ende seiner Rotorwelle 53 angeordneten Handrädchens 111 mit mäßiger Anstrengung gedreht werden kann, und ansonsten - wegen der reibungsschlüssigen Fixierung des Schrittmotor-Rotors eine Abwärtsbewegung des Antriebszylinderkolbens 17 ausschließlich dazu führen kann, daß das Nachlauf-Regelventil 29 in seine Funktionsstellung II gelangt, in der der obere Antriebsdruckraum 27 des Hydrozylinders 11 druckentlastet ist und keinerlei Verbindung zwischen dem unteren Antriebsdruckraum 28 und dem oberen Antriebsdruckraum 27 besteht, d.h. in diejenige Funktionsstellung, die gleichsam selbstsichernd ist.

In zweckmäßiger Auslegung entspricht das mittels der Bremsfedern 78 entfaltbare Bremsmoment zwischen 1/4 und 1/3 des vom Schrittmotor 49 entfaltbaren Drehmoments.

Für den normalen, elektronisch gesteuerten Betrieb der Presse 10, in dem der Schrittmotor 49 mit hoher Impulsfolgefrequenz der Sollwert-Vorgabe-Impulse angesteuert wird und leichtgängig drehbar sein muß, wird die Feststellbremse 67 durch Einkopplung des Betriebsdruckes des Druckversorgungsaggregats 31 in die Ringräume 102 und 103 bei gleichzeitiger Druckentlastung der Antriebsdruckräume 93 und 94 der Bremsen-Antriebszylinder 76 und 77 gelüftet. Die hierbei als Antriebsflächen benutzten Ringflächen, deren Betrag der Differenz der Querschnittsflächen der größeren Bohrungsstufen 86 und 87 und der kleineren Bohrungsstufen 81 und 82 entspricht, sind dahingehend dimensioniert, daß die durch die Druckbeaufschlagung dieser Flächen erzielte, die Stufenkolben 73 und 74 radial nach außen drängende Kraft K mindestens dem doppelten Wert der von den Bremsfedern 78 im gelüfteten Zustand der Bremse entfalteten Rückstellkraft K_{R} entspricht, wobei ein zweckmäßiger Wert dieses Verhältnisses um 2,4 liegt.

Zum "aktiven" Anlegen der Feststellbremse 67 mit einem Bremsmoment, das deutlich, d.h. mindestens 3x höher ist, als das vom Schrittmotor 49 entfaltbare Drehmoment, werden die Ringräume 102 und 103 der beiden Bremsen-Antriebszylinder 76 und 77 druckentlastet und deren durch die größeren Kolbenflansche 88 und 89 großflächig begrenzten Antriebsdruckräume 93 und 94 mit dem hohen Ausgangsdruck des Druckversorgungsaggregats 31 beaufschlagt.

Ein hierzu vorgesehenes Bremsen-Steuerventil 112 ist als 4/2-Wege-Magnetventil ausgebildet, in dessen Grundstellung 0 der Betriebsdruck in die großflächig begrenzten Antriebsdruckräume 93 und 94 der Bremsen-Antriebszylinder 76 und 77 eingekoppelt ist und deren Ringräume 102 und 103 mit dem drucklosen Vorratsbehälter 43 verbunden sind, und in dessen erregter Stellung I die großflächig begrenzten Antriebsdruckräume 93 und 94 dieser Antriebszylinder 76 und 77 druckentlastet und die Ringräume 102 und 103 mit dem Druckausgang 32 des Druckversorgungsaggregats 31 verbunden sind so daß die Feststellbremse 67 gelüftet ist.

Die der zylindrischen Bremshüse 72 zugewandten Stirnseiten der die Bremsbacken 68 und 69 bildenden Flansche der Kolben 73 und 74 haben beim dargestellten Ausführungsbeispiel eine zylindrisch-konkave Wölbung 113, deren Krümmungsradius kleiner ist als der Radius der äußeren Mantelfläche 114 der Bremshülse 72, wobei die geradlinigen Kanten 116, über die die konkav gewölbten Bereiche 113 an die im übrigen ebenen Stirnflächen 117 der Antriebszylinderkolben 73 und 74 anschließen und entlang derer die Kolben 73 und 74 im geschlossenen Zustand der Feststellbremse 67 an deren Bremshülse 72 anliegen, bezogen auf die zentrale Längsachse 71 der Feststellbremse 67 einen Winkelabstand ϕ von etwa 90° haben. Die geradlinigen "Kanten" 116 sind als mit einem kleinen Krümmungsradius von 1/5 mm bis 1 mm konvex gewölbte Übergangsbereiche zwischen den konkaven Wölbungen 113 und den ebenen Stirnflächenbereichen der Kolben 73 und 74 ausgebildet. Durch diese glatt gewölbte Ausbildung der geradlinigen Berührungsbereiche der Kolben 73 und 74 wird sowohl deren Verschleiß als auch ein Verschleiß der Bremshülse 72 hinreichend niedrig gehalten, daß deren Standzeit dem Sicherheitsbedürfnis bei weitem genügt.

Der Lüftungshub der Kolben 73 und 74 ist deutlich kleiner gewählt als die Höhe h des sich zwischen je zwei Berührungslinien 116 erstreckenden Querschnittssegments der Bremshülse, so daß die Kolben 73 und 74, auch wenn Sie beim Lüften der Bremse eine Drehung um ihre zentrale Längsachse 98 erfahren sollten, beim Anlegen der Bremse 67 stets weder in diejenige Konfiguration zurückgedreht werden, in der die Berührungslinien parallel zur zentralen Längsachse 71 der Rotorwelle 53 bzw. der Bremshülse 72 verlaufen. In einer typischen Auslegung der Feststellbremse 67 beträgt deren maximaler Kolbenhub etwa der halben Höhe des Kreissegments.

Um den Beitrag der Bremsscheibe 72 zum Gesamsträgheitsmoment des Rotors des Sollwert-Vorgabemotors 49 möglichst gering zu halgen, ist die Bremsscheibe 72 aus einem Leichtmetall gefertigt und durch eine härtende Oberflächenbehandlung gegen Verschleiß geschützt. Auch die Kolben 73 und 74 können aus einem Leichtmetall bestehen, das einer entsprechenden Oberflächenbehandlung unterzogen ist oder aus einem gut glättbaren Metall, z.B. Stahl.

in einer den Fig. 2a und 2b entsprechenden Gestaltung der Feststellbremseinrichtung 67 war diese mit folgenden Werten der Parameter r (Radius der Reibfläche 114 der Bremshülse 72), d (Durchmesser der kleineren Bohrungsstufen 81 und 82 der Antriebszylinder 76 und 77 der Bremse 67, D (Durchmesser der größeren Bohrungsstufen der Zylinderbohrungen der Antriebszylinder 76 und 77), ϕ (Winkelabstand der Anlagekanten 116 der Bremsbacken 68 und 69) und 1 (axiale Ausdehnung der Bremshülse 72) realisiert:
r = 7,5 mm, d = 12 mm, D = 14 mm, ϕ = 90° und 1 = 15 mm.

Die Stellkraft der Wendelfedern 78 in der Bremstellung betrug jeweils 80 N und ihre Rückstellkraft in der gelösten Konfiguration der Bremse 67 100 N. Bei einem Betriebsdruck von ca. 120 bar entfaltete die Bremse in ihrem elektrisch gesteuert, hydraulisch betätigten Zustand einschließlich der unterstützenden Wirkung der Bremsfedern 78 ein Gesamt-Bremsmoment von 400 Ncm, wobei der durch die Federkräfte bedingte Bremsmoment-Anteil ca. 30 Ncm betrug.

In dieser Auslegung ist die Feststellbremse 67 geeignet, einen Schrittmotor 49, der ein Drehmoment von 120 Ncm entfaltet, hinreichend sicher festzusetzen. Die Bremse 67 ist hinsichtlich einer gleichmäßig guten Bremswirkung unempfindlich gegen eine z.B. durch Lecköl bedingte Bildung eines Ölfilms auf der Reibfläche 114 der Bremshülse 72 und/oder den Bremsbacken 68 und 69, da wegen deren Linienberührung miteinander eine so hohe Flächenpressung entsteht, daß ein solcher Schmierfilm im Reibbereich zuverlässig zertrennt wird und stets blanke Flächen der Bremsenelemente mit einem für deren Materialpaarung charakteristischen - konstanten Reibbeiwert in kraftschlüssig-feste Verbindung miteinander gelangen.

Zur Überwachung der Drücke, die in den großflächig begrenzten Antriebsdruckräumen 93 und 94 sowie in den Ringräumen 102 und 103 der Feststellbremse 67 herrschen, ist je ein Druckschalter 118 und 119 vorgesehen, die für den druckbeaufschlagten und den drucklosen Zustand der jeweiligen Druckräume charakteristische elektrische Ausgangssignale abgeben, die der Sicherheits-Stelleinheit 23 als Informations-Eingaben zugeleitet sind.

## Patentansprüche

1. Einrichtung zur Sicherung einer elektrohydraulischen Antriebseinheit (11) gegen ein störungsbedingtes Ausrücken ihres beweglichen Elements (16) aus einer Stillstandsposition, in der im Arbeitsbereich (22) einer Fertigungsmaschine, (10) bei der die Antriebseinheit als Werkzeug oder Werkstück-Vorschub- oder Positionierungsantrieb eingesetzt ist, gefahrlos manuelle Eingriffe möglich sein sollen, wobei
a) die Antriebseinheit NC- oder CNC-gesteuert ist,
b) zur Positionssteuerung des beweglichen Elements des hydraulischen Antriebes ein mit inkrementaler elektrischer Positions-Sollwertvorgabe und mechanischer Positions-Istwert-Rückmeldung arbeitendes NachlaufRegelventil (29) vorgesehen ist und
c) die inkrementale Positions-Sollwertvorgabe durch impulsweise Ansteuerung eines Elektromotors (49) zur Ausführung von Drehungen seines Rotors um inkrementale Winkelbeträge erfolgt, **gekennzeichnet durch** die folgenden Merkmale:
d) Der Sollwert-Vorgabemotor (49) ist mit einer Feststell-Bremseinrichtung (67) ausgerüstet ist, die, gesteuert durch Ausgangssignale einer elektronischen Steuereinheit der Maschine (10) im Falle einer kontrollierten Stillstandsphase der Antriebseinheit (11) in einen aktivierten Zustand gelangt, in dem auf den Rotor (53) des Sollwert-Vorgabe-Motors (49) ein Bremsmoment wirkt, das einem Mehrfachen des durch den Motor entfaltbaren Drehmoments entspricht;
e) im Falle des Bewegungs-Steuerungsbetriebes des Motors (49) ist die Feststell-Bremseinrichtung (67) durch Ansteuerung mindestens eines Aktuators (76,77) aktiv gelöst, der gegen eine von einem Kraftspeicher (78) permanent ausgeübte Stellkraft, durch die die Feststell-Bremseinrichtung (67) in ihre Bremsfunktionsstellung drängbar ist, die Lösungsbetätigung der Feststell-Bremseinrichtung (67) bewirkt;
f) bei einer Fehlfunktion des hydraulischen und/oder des elektrischen Versorgungs- und Steuerkreises gelangt die Feststell-Bremseinrichtung (67) durch die permanent wirksame Stellkraft ebenfalls in ihren den Rotor (53) des Sollwert-Vorgabemotors (49) kraftschlüssig fixierenden Funktionszustand.

2. Sicherungseinrichtung nach Anspruch 1, **dadurch gekennzeichnet,** daß das allein durch die Stellkraft des Kraftspeichers (78) auf den Rotor (53) des Sollwertvorgabemotors (49) ausübbare Bremsmoment deutlich kleiner ist als das von dem Sollwert-Vorgabemotor erzeugbare Drehmoment und zwischen 1/5 und 1/2, vorzugsweise um 1/4 des Motor-Drehmoments beträgt.

3. Sicherungseinrichtung nach Anspruch 1 oder 2, **dadurch gekennzeichnet,** daß das im aktivierten Zustand der Feststellbremseinrichtung (67) zusätzlich zu dem aus der Betätigungskraft des Kraftspeichers resultierenden Bremsmoment erzeugte Bremsmoment zwischen dem doppelten und dem fünffachen, vorzugsweise etwa dem dreifachen Wert des maximalen Motordrehmoments beträgt, und daß die von dem Aktuator (76,77) zum Lösen der Feststellbrems einrichtung (67) entfaltbare Kraft zwischen dem doppel ten Wert der in Schließrichtung der Bremse (67) wirkenden Kraft des Kraftspeichers (78) und deren vierfachem Wert beträgt und vorzugsweise etwa dem 2,5-fachen dieses Wertes entspricht.

4. Sicherungseinrichtung nach einem der Ansprüche 1 bis 3, **dadurch gekennzeichnet,** daß die Feststellbremseinrichtung (67) als Backenbremse mit radial verschiebbar geführten, an die äußere Mantelfläche eines mit der Rotorwelle (53) des Sollwertvorgabemotors (49) koaxialen, mit dieser drehfest verbundenen, ringflanschförmigen Reibkörpers (72) andrückbaren Backen (68,69) ausgebildet ist, die durch vorgespannte, den Kraftspeicher bildende Federn (78) in Anlage mit der Reibfläche des Reibkörpers (72) drängbar und durch Ansteuerung des Aktuators (76,77) von der Reibfläche abhebbar sind, wobei die Bremsbacken (68,69) axialsymmetrisch bezüglich der Achse (71) der Rotorwelle gruppiert sind, und wobei vorzugsweise zwei Bremsbacken (68 und 69) vorgesehen sind.

5. Sicherungseinrichtung nach Anspruch 4, **dadurch gekennzeichnet,** daß sowohl zum Lösen der Feststellbremse (67) als auch zu deren die Entfaltung des höchstmöglichen Bremsmoments vermittelnden Aktivierung vorgesehene Aktuatoren als doppelt-wirkende lineare Hydrozylinder (76 und 77) mit einseitigen Kolbenstangen ausgebildet sind, mit denen die Bremsbacken (68,69) fest verbunden sind, wobei diese Hydrozylinder (76 und 77) durch Druckbeaufschlagung ihrer Kolben (73,74) auf deren stangenseitiger, ringförmiger Kolbenfläche und Druckentlastung ihrer durch die Kolben (73,74) großflächig begrenzten Druckräume (93,94) zum Lösen der Bremse (67) und durch Druckbeaufschlagung ihrer großflächig begrenzten Druckräume (93,94) und -Entlastung ihrer stangenseitigen Druckräume (102,103) zum aktiven Anlegen der Bremse mit hoher Bremskraft ansteuerbar sind.

6. Sicherungseinrichtung nach Anspruch 5, **dadurch gekennzeichnet,** daß die den Kraftspeicher bildenden vorgespannten Federn (78) als Druck-Wendelfedern ausgebildet sind, die sich an den axial gehäusefesten Begrenzungswänden der durch die Kolben (73,74) großflächig begrenzten Antriebsdruckräume (93,94) der Hydrozylinder (76,77) abstützen und auf dem überwiegenden Teil ihrer Länge von Sackbohrungen (109) der Zylinderkolben (73, 74) aufgenommen sind.

7. Sicherungseinrichtung nach Anspruch 5 oder 6, **dadurch gekennzeichnet,** daß die zur Betätigung der Bremsbacken (68,69) vorgesehenen Hydrozylinder (76,77) hydraulisch parallel geschaltet sind und daß mindestens ein Druckschalter (118,119) vorgesehen ist, der für niedrigen und hohen Druck in den großflächig begrenzten Druckräumen (93,94) der Hydrozylinder (76,77) charakteristische elektrische Ausgangssignale erzeugt.

8. Sicherungseinrichtung nach Anspruch 7, **dadurch gekennzeichnet,** daß ein Druckschalter (118) vorgesehen ist, der für niedrigen und hohen Druck in den stangenseitigen Druckräumen der Hydrozylinder (76, 77) charakteristische elektrische Ausgangssignale erzeugt.

9. Sicherungseinrichtung nach einem der Ansprüche 4 bis 8, **dadurch gekennzeichnet** daß die Bremsbacken (68,69) eine Gestaltung haben, die im angelegten Zustand der Bremse (67) eine linienförmige Berührung mit deren Reibkörper (72) ergibt.

10. Sicherungseinrichtung nach Anspruch 9, **dadurch gekennzeichnet,** daß die Bremsbacken (68,69) den Reibkörper (72) im angelegten Zustand der Bremse (67) jeweils entlang zweier parallel zur zentralen Längsachse (71) des Rotors (53) verlaufender Linien (116) berühren und, in Richtung dieser Längsachse gesehen, ihr azimutaler Abstand (ϕ) einen Wert zwischen 30 und 120°, vorzugsweise einen Wert um 90° hat, und daß der radiale Verschiebeweg der Bremsbacken zwischen dem gelösten Zustand der Bremse und deren Konfiguration, in der die Bremsbacken (68, 69) am Reibkörper (72) anliegen, kleiner ist als der durch den Term r(1-cosϕ) gegebene Wert, in dem mit r der Radius der Reibfläche (114) des Reibkörpers (72) bezeichnet ist.

11. Sicherungseinrichtung nach Anspruch 10, **dadurch gekennzeichnet,** daß die Bremsbacken (68,69), gesehen in einer rechtwinklig zur zentralen Rotorachse (71) verlaufenden Schnittebene die Form eines dickwandigen U-Profils haben, dessen freie Schenkel im Reibungsbereich einen Krümmungsradius haben, der einem kleinen Bruchteil von 1/10 bis 1/100 des Krümmungsradius der Reibfläche (114) des Reibkörpers (72) entspricht.

12. Sicherungseinrichtung nach Anspruch 11, **dadurch gekennzeichnet,** daß die Backen (68,69) zwischen Ihren parallelen Anlagekanten (116) eine kreiszylindrisch gekrümmte, konkave Wölbung (113) haben, deren Krümmungsradius kleiner ist als derjenige der äußeren Mantelfläche (114) des Reibkörpers (72).

13. Sicherungseinrichtung nach einem der Ansprüche 1 bis 12, **dadurch gekennzeichnet,** daß die parallel zur Rotor-Drehachse (71) gemessene Ausdehnung der Bremsbacken (68,69) kleiner ist als die in derselben Richtung gemessene Dicke des Reibkörpers (72) der Feststellbremse (67), dieser jedoch annähernd gleich ist.

14. Sicherungseinrichtung nach Anspruch 13, **dadurch gekennzeichnet,** daß das Material, aus dem die Bremsbacken (68,69) bestehen, zumindest in einer Oberflächenschicht härter ist als das Material des Reibkörpers (72).

15. Sicherungseinrichtung nach einem der Ansprüche 4 bis 14, **dadurch gekennzeichnet,** daß der Reibkörper als außen zylindrische Hülse (72) ausgebildet ist, die auf die Rotorwelle (53) aufsteckbar ist und durch wechselseitigen formschlüssigen Eingriff mit dieser drehfest koppelbar ist.

16. Sicherungseinrichtung nach Anspruch 15, **dadurch gekennzeichnet,** daß der Reibkörper (72) aus einem Leichtmetall besteht.

## Claims

1. A safety device for securing an electrohydraulic drive unit (11) against a disturbance-induced release of its movable element (16) from an inoperative position, in which it should be possible to safely intervene manually in the operating region (22) of a manufacturing machine (10), in which the drive unit is fitted as a tool or workpiece advance or positioning drive, wherein
a) the drive unit is NC- or CNC-controlled,
b) for the position control of the movable element of the hydraulic drive, a follow-up control valve (29) is provided, which operates with incremental electrical position nominal value presetting and mechanical position actual value feedback and
c) the incremental position nominal value presetting is effected by pulsed actuation of an electromotor (49) to execute rotations of its rotor by incremental angular amounts, characterised by the following features:
d) The nominal value preset motor (49) is equipped with a locking brake device (67), which, controlled by output signals of an electronic control unit of the machine (10), in the case of a monitored inoperative phase of the drive unit (11) enters an actuated state, in which a braking torque corresponding to a multiple of the torque which can be generated by the motor acts upon the rotor (53) of the nominal value preset motor (49) ;
e) in the case of the movement control operation of the motor (49), the locking brake device (67) is actively released by the actuation of at least one actuator (76, 77), which effects the release actuation of the locking brake device (67) relative to an adjusting force, which is permanently exerted by a power store (78) and as a result of which the locking brake device (67) can be forced into its locking operating position;
f) in the event of a faulty functioning of the hydraulic and/or electrical supply and control circuit, the locking brake device (67) is also adjusted by the permanently acting adjusting force into its operating state in which it holds the rotor (53) of the nominal value preset motor (49) in a force-locking manner.

2. A safety device according to claim 1, characterised in that the torque which can be exerted by the adjusting force of the power store (78) alone upon the rotor (53) of the nominal value preset motor (49) is clearly less than the torque which can be generated by the nominal value preset motor and is between 1/5 and 1/2, preferably 1/4 of the motor torque.

3. A safety device according to claim 1 or 2, characterised in that the braking torque generated in the activated state of the locking brake device (67) in addition to the braking torque resulting from the actuating force of the power store measures between two and five times, preferably approximately three times the maximum motor torque, and the force which can be generated by the actuator (76, 77) in order to release the locking brake device (67) lies between twice the value of the force of the power store (78) acting in the direction of closure of the brake (67) and four times said value, and preferably corresponds to approximately 2.5 times said value.

4. A safety device according to one of claims 1 to 3, characterised in that the locking brake device (67) is constructed as a shoe brake with shoes (68, 69), which are guided so as to be radially displaceable and can be forced against the outer cylindrical surface of an annular flange-shaped friction element (72), which is coaxial to the rotor shaft (53) of the nominal value preset motor (49) and is non-rotatably connected to said rotor shaft, the shoes (68, 69) being forced by prestressed springs (78) forming the power store into abutment with the friction surface of the friction element (72) and being lifted from the friction surface by actuation of the actuator (76, 77), the brake shoes (68, 69) being grouped axially symmetrical to the axis (71) of the rotor shaft, and two braking shoes (68 and 69) preferably being provided.

5. A safety device according to claim 4, characterised in that actuators provided both for releasing the locking brake (67) and for the actuation of the locking brake resulting in the generation of the maximum braking torque are constructed as double-action linear hydrocylinders (76 and 77) with piston rods at one end, to which the brake shoes (68, 69) are fixedly connected, it being possible to actuate these hydrocylinders (76 and 77) by applying pressure to the rod-side, annular piston surface of the hydrocylinder pistons (73, 74) and by relieving the pressure in their pressure chambers (93, 94) bounded over a large surface area by the pistons (73, 74) in order to release the brake (67), and by applying pressure to their pressure chambers (93, 94) bounded over a large surface area and by relieving pressure in their pressure chambers (102, 103) on the side facing the piston rods in order to actively apply the brake with a high braking force.

6. A safety device according to claim 5, characterised in that the prestressed springs (78) forming the power store are constructed as helical compression springs, which are supported against the axial housing-fixed boundary walls of the drive pressure chambers (93, 94) of the hydrocylinders (76, 77) bounded over a large surface area by the pistons (73, 74) and are accommodated over most of their length by blind bores (109) of the cylinder pistons (73, 74).

7. A safety device according to claim 5 or 6, characterised in that the hydrocylinders (76, 77) provided for actuating the brake shoes (68, 69) are hydraulically connected in parallel, and at least one pressure switch (118, 119) is provided, which generates electrical output signals characteristic of low and high pressure in the pressure chambers (93, 94) of the hydrocylinders (76, 77) bounded over a large surface area.

8. A safety device according to claim 7, characterised in that a pressure switch (118) is provided, which generates electrical output signals characteristic of low and high pressure in the pressure chambers of the hydrocylinders (76, 77) on the side facing the piston rods.

9. A safety device according to one of claims 4 to 8, characterised in that the brake shoes (68, 69) have a form which in the applied state of the brake (67) produces a linear contact with the friction element (72) of the brake.

10. A safety device according to claim 9, characterised in that, in the applied state of the brake (67), the brake shoes (68, 69) contact the friction element (72) in each case along two lines (116) extending parallel to the central longitudinal axis (71) of the rotor (53), and viewed in the direction of said longitudinal axis, their azimuthal distance (ϕ) has a value of between 30 and 120°, preferably a value of 90°, and the radial displacement path of the brake shoes between the released state of the brake and their configuration, in which the brake shoes (68, 69) rest against the friction element (72), is smaller than the value defined by the term r(1-cosϕ), in which r designates the radius of the friction surface (114) of the friction element (72).

11. A safety device according to claim 10, characterised in that the brake shoes (68, 69), viewed in a sectional plane extending at right angles to the central rotor axis (71), have the shape of a thick-walled U-profile, whose free limbs have a radius of curvature in the friction region corresponding to a small fraction of 1/10 to 1/100 of the radius of curvature of the friction surface (114) of the friction element (72).

12. A safety device according to claim 11, characterised in that, between their parallel bearing edges (116), the shoes (68, 69) have a circular-cylindrical, concave, curved section (113), whose radius of curvature is smaller than that of the outer cylindrical surface (114) of the friction element (72).

13. A safety device according to one of claims 1 to 12, characterised in that the extension of the brake shoes (68, 69) measured parallel to the rotor axis of rotation (71) is smaller than the thickness of the friction element (72) of the locking brake (67) measured in the same direction, but is approximately equal to said thickness.

14. A safety device according to claim 13, characterised in that the material, from which the brake shoes (68, 69) are made, is harder, at least in a surface layer, than the material of the friction element (72).

15. A safety device according to one of claims 4 to 14, characterised in that the friction element is constructed as an externally cylindrical sleeve (72), which can be fitted onto the rotor shaft (53) and can be non-rotatably coupled to said rotor shaft by mutual positive-locking engagement.

16. A safety device according to claim 15, characterised in that the friction element (72) is made of a light metal.

## Revendications

1. Dispositif de sécurité pour une unité d'entraînement électro-hydraulique (11), pour empêcher l'élément mobile (16) de cette dernière d'être sorti, par suite d'une défaillance, d'une position d'immobilisation dans laquelle des interventions manuelles doivent pouvoir être effectuées sans danger dans la zone de travail (22) d'une machine de fabrication (10) dans laquelle l'unité d'entraînement est utilisée comme entraînement d'avance ou de positionnement d'outil ou de pièce,
a) l'unité d'entraînement étant à commande numérique ou à commande numérique par calculateur (CNC),
b) un distributeur de régulation par poursuite (29), travaillant avec allocation incrémentielle électrique de consigne de position et communication mécanique de valeur réelle de position, étant prévu pour la commande de la position de l'élément mobile de l'entraînement hydraulique, et
c) l'allocation incrémentielle de consigne de position s'effectuant en asservissant par impulsions un moteur électrique (49) afin de faire tourner son rotor de montants angulaires incrémentiels,
**caractérisé** par les caractéristiques suivantes :
d) le moteur d'allocation de consigne (49) est équipé d'un dispositif de freinage d'arrêt (67) qui, sous la commande de signaux de sortie d'une unité de commande électronique de la machine (10), parvient, dans le cas d'une phase d'immobilisation contrôlée de l'unité d'entraînement (11), dans un état activé dans lequel un couple de freinage qui correspond à un multiple du couple pouvant être développé par le moteur agit sur le rotor (53) du moteur d'allocation de consigne (49) ;
e) dans le cas du fonctionnement commandé de déplacement du moteur (49), le dispositif de freinage d'arrêt (67) est activement desserré par l'asservissement d'au moins un actionneur (76, 77), qui produit l'actionnement de desserrage du dispositif de freinage d'arrêt (67) à l'encontre d'une force d'asservissement, exercée en permanence par un accumulateur de force (78), par laquelle le dispositif de freinage d'arrêt (67) peut être serré dans sa position fonctionnelle de freinage ;
f) en cas de défaillance fonctionnelle du circuit d'alimentation et de commande hydraulique et/ou électrique, le dispositif de freinage d'arrêt (67) parvient également, par la force d'asservissement active en permanence, dans son état fonctionnel bloquant à force le rotor (53) du moteur d'allocation de consigne (49).

2. Dispositif de sécurité selon la revendication 1, **caractérisé** en ce que le couple de freinage qui peut être exercé sur le rotor (53) du moteur d'allocation de consigne (49) par la seule force d'asservissement de l'accumulateur de force (108) est nettement inférieur au couple qui peut être produit par le moteur d'allocation de consigne, et est compris entre 1/5 et 1/2, et de préférence égal à environ 1/4 du couple du moteur.

3. Dispositif de sécurité selon la revendication 1 ou 2, **caractérisé** en ce que le couple de freinage, qui est produit à l'état activé du dispositif de freinage d'arrêt (67) en plus du couple de freinage résultant de la force d'actionnement de l'accumulateur de force, est compris entre deux et cinq fois, et de préférence égal à environ trois fois le couple maximal du moteur, et en ce que la force, qui peut être développée par l'actionneur (76, 77) pour desserrer le dispositif de freinage d'arrêt (67), est comprise entre le double de la valeur de la force de l'accumulateur de force (108) agissant dans la direction d'application du frein (67) et le quadruple de cette valeur, et est de préférence égale à environ 2,5 fois cette valeur.

4. Dispositif de sécurité selon une des revendications 1 à 3, **caractérisé** en ce que le dispositif de freinage d'arrêt (67) est réalisé sous forme de frein à mâchoires, avec des mâchoires (68, 69) guidées en déplacement radial et pouvant être pressées contre la face d'enveloppe extérieure d'un corps de friction (72) coaxial à l'arbre de rotor (53) du moteur d'allocation de consigne (49), assemblé à ce dernier en solidarité de rotation et en forme de collet annulaire, mâchoires qui peuvent être pressées en application contre la surface de friction du corps de friction (72) par des ressorts (108) précontraints constituant l'accumulateur de force et qui peuvent être décollées de la surface de friction en asservissant l'actionneur (76, 77), les mâchoires (68, 69) étant groupées en symétrie axiale par rapport à l'axe (71) de l'arbre de rotor et deux mâchoires (68 et 69) étant de préférence prévues.

5. Dispositif de sécurité selon la revendication 4, **caractérisé** en ce que les actionneurs, prévus tant pour le desserrage du frein d'arrêt (67) que pour son activation procurant le développement du couple de freinage maximal possible, sont réalisés sous forme de cylindres hydrauliques (76 et 77) linéaires à double action avec d'un côté des tiges de piston auxquelles sont fixement reliées les mâchoires de frein (68, 69), ces cylindres hydrauliques (76 et 77) pouvant être asservis pour le desserrage du frein (67) par alimentation en pression de leurs pistons (73, 74) sur la face annulaire des pistons côté tiges et évacuation de la pression de leurs chambres de pression (93, 94) délimitées sur une grande surface par les pistons (73, 74), et pour l'application active du frein avec une force de freinage élevée par alimentation en pression de leurs chambres de pression (93, 94) délimitées sur une grande surface et évacuation de la pression de leurs chambres de pression (102, 103) côté tiges.

6. Dispositif de sécurité selon la revendication 5, **caractérisé** en ce que les ressorts précontraints (78) constituant l'accumulateur de force sont réalisés sous forme de ressorts spiraux de compression, qui s'appuient contre les parois de délimitation, axialement solidaires du boîtier, des chambres de pression d'entraînement (93, 94) des cylindres hydrauliques (76, 77) délimitées sur une grande surface par les pistons (73, 74), et qui sont reçus pour la majeure partie de leur longueur dans des perçages borgnes (109) des pistons (73, 74) des cylindres.

7. Dispositif de sécurité selon la revendication 5 ou 6, **caractérisé** en ce que les cylindres hydrauliques (76, 77) prévus pour l'actionnement des mâchoires de frein (68, 69) sont montés hydrauliquement en parallèle, et en ce qu'il est prévu au moins un manocontacteur (118, 119), qui produit des signaux de sortie électriques caractéristiques de la basse et haute pression dans les chambres de pression (93, 94) délimitées sur une grande surface des cylindres hydrauliques (76, 77).

8. Dispositif de sécurité selon la revendication 7, **caractérisé** en ce qu'il est prévu un manocontacteur (118) qui produit des signaux de sortie électriques caractéristiques de la basse et haute pression dans les chambres de pression côté tiges des cylindres hydrauliques (76, 77).

9. Dispositif de sécurité selon une des revendications 4 à 8, **caractérisé** en ce que les mâchoires de frein (68, 69) ont une configuration qui, lorsque le frein (67) est appliqué, produit un contact linéaire avec son corps de friction (72).

10. Dispositif de sécurité selon la revendication 9, **caractérisé** en ce que les mâchoires de frein (68, 69), lorsque le frein (67) est appliqué, entrent respectivement en contact avec le corps de friction (72) le long de deux lignes (116) s'étendant parallèlement à l'axe longitudinal central (71) du rotor (53) et, considérée dans la direction de cet axe longitudinal, leur distance azimutale (φ) a une valeur comprise entre 30 et 120°, de préférence une valeur d'environ 90°, et en ce que la course de déplacement radial des mâchoires de frein, entre l'état desserré du frein et sa configuration dans laquelle les mâchoires de frein (68, 69) s'appliquent contre le corps de friction (72), est inférieure à la valeur définie par le terme r(1 - cosφ), où r désigne le rayon de la surface de friction (114) du corps de friction (72).

11. Dispositif de sécurité selon la revendication 10, **caractérisé** en ce que les mâchoires de frein (68, 69), considérées dans un plan de coupe perpendiculaire à l'axe central (71) du rotor, ont la forme d'un profil en U à parois épaisses, dont les branches libres possèdent dans la région de friction un rayon de courbure qui correspond à une petite fraction, de 1/10 à 1/100, du rayon de courbure de la surface de friction (114) du corps de friction (72).

12. Dispositif de sécurité selon la revendication 11, **caractérisé** en ce que les mâchoires (68, 69) possèdent, entre leurs bords d'application parallèles (116), un bombement concave (113) de courbure cylindrique circulaire, dont le rayon de courbure est inférieur à celui de la face d'enveloppe extérieure (114) du corps de friction (72).

13. Dispositif de sécurité selon une des revendications 1 à 12, **caractérisé** en ce que l'étendue, mesurée parallèlement à l'axe (71) de rotation du rotor, des mâchoires de frein (68, 69) est inférieure à l'épaisseur, mesurée dans la même direction, du corps de friction (72) du frein d'arrêt (67), mais lui est approximativement identique.

14. Dispositif de sécurité selon la revendication 13, **caractérisé** en ce que le matériau dont sont constituées les mâchoires de frein (68, 69) est, au moins dans une couche superficielle, plus dur que le matériau du corps de friction (72).

15. Dispositif de sécurité selon une des revendications 4 à 14, **caractérisé** en ce que le corps de friction est réalisé sous forme de manchon (72) extérieurement cylindrique, qui peut être emmanché sur l'arbre de rotor (53) et peut lui être accouplé en solidarité de rotation par engagement positif réciproque.

16. Dispositif de sécurité selon la revendication 15, **caractérisé** en ce que le corps de friction (72) est réalisé en métal léger.
